# EUROPEAN PATENT APPLICATION

(11) **EP 4 336 290 A1**
(43) Date of publication of application: **13.03.2024**
(21) Application number: 23195959.4
(22) Date of filing: 07.09.2023
(51) Int. Cl.: G05B 19/418, B65G 57/00, G05B 19/402, G05B 19/404, G05B 23/02, B65G 43/08

(54) **SYSTEM AND METHOD FOR DYNAMIC NEST AND ROUTING ADJUSTMENT**

(30) Priority: 07.09.2022 US 202263404313 P
(71) Applicant: ATS Corporation, Cambridge, Ontario N3H 4R7 (CA)
(72) Inventor: DOLGOVYKH, Anton, Cambridge, Ontario, N3H 4R7 (CA)
(74) Representative: Ipey

(57) **Abstract**

A system and method for dynamic nest and routing adjustment in an automation system. The method includes: operating the automation system; receiving operational data related to the automation system from a conveyor system and at least one automation station; analyzing the operational data to determine if adjustment of nest offsets or routing of parts is required; determining an adjusted nest offset or part routing; implementing the adjusted nest offset or part routing; and return to operating the automation system. The system includes: a controller to operate the automation system; an input for receiving the operational data; a machine learning (ML) module to analyze the operational data to determine if adjustment of nest offsets or routing of parts is required; a processor to determine an adjusted nest offset or part routing; and a configuration module to implement the adjusted nest offset or part routing.

## Description

### FIELD

The present disclosure relates generally to a system and method for dynamic nest and routing adjustment. More particularly, the present disclosure relates to a system and method for automatically determining nest offsets and automatically adapting station routing.

### BACKGROUND

Modern manufacturing and automation systems and processes are becoming more complex because, at least in part, these systems and processes are required to be flexible, fast, and accurate over long periods of time. These systems and processes are expected to provide appropriate product quality in short time frames. These systems and processes also seek to provide high machine efficiency with low downtime for maintenance, troubleshooting, and the like.

The complexity of manufacturing and automation systems is further increased because there can be situations where different products need to be processed on the same manufacturing system using a combination of different stations and/or a particular product may need to be processed on a manufacturing system in which one or more stations are not operable, due to maintenance, repair or the like. Further, in manufacturing systems, there can be various different elements working together, often from different suppliers, that each have their own requirements but need to operate with other elements to allow efficient and correct operation of the overall manufacturing system. In some cases, these requirements can include tolerances, settings, configurations and the like and these requirements may change over time even within one piece of equipment.

As such, there is a need for an improved system and method for managing automation systems and equipment in manufacturing environments and, in particular, an improved system and method for dynamic nest and station adjustment.

### SUMMARY

According to one aspect herein, there is provided a method for dynamic nest and routing adjustment in an automation system, the method including: operating the automation system; receiving operational data related to the automation system from a conveyor system and at least one automation station; analyzing the operational data to determine if adjustment of nest offsets or routing of parts is required; determining an adjusted nest offset or part routing based on the operational data; implementing the adjusted nest offset or part routing via a configuration module of the automation system; and return to operating the automation system.

In some cases, the analyzing and determining are performed by a machine language (ML) module. In the case of an ML module, the method may further include providing feedback to update the ML module based on operational data received after the implementing. In some cases, the ML module operation may include: determining if an ML result is available based on a current ML model, and, if not, requesting further input and return to determining if an ML result is available, if so, outputting the result.

In some cases, the automation system may include a plurality of automation stations and the receiving operational data may include receiving data relating to the failure of at least one of the plurality of automation stations, indicating a need for an adjustment in routing of parts.

In some cases, the receiving operational data may include receiving vision data of the at least one automation station, indicating a need for an adjustment of nest offsets.

In some cases, the adjustment of nest offset may be performed by controlling an accessory on a pallet of the conveyor system.

In some cases, the adjustment of nest offset may be performed by controlling a moving element of the conveyor system.

According to another aspect herein, there is provided a system for dynamic nest and routing adjustment in an automation system, the system including: a controller configured to operate the automation system; an input for receiving operational data related to the automation system from a conveyor system and at least one automation station; a machine learning (ML) module configured to analyze the operational data to determine if adjustment of nest offsets or routing of parts is required; a processor configured to, with the machine learning (ML) module, determine an adjusted nest offset or part routing based on the operational data; and a configuration module configured to implement the adjusted nest offset or part routing.

In some cases, the system may further include providing feedback to the ML module based on operational data received after the configuration module implements the adjusted nest offset or part routing.

In some cases, the ML module may include a current ML model and the ML module is configured to request further input if the current ML model doesn't return a result and update the ML model based on the further input.

In some cases, the at least one automation station may include a plurality of automation stations and the input receives operational data relating to the failure of at least one of the plurality of automation stations, indicating a need for an adjustment in routing of parts.

In some cases, the input receives operational data including vision data of the at least one automation station, indicating a need for an adjustment of nest offsets.

In some cases, the adjustment of nest offset is performed by controlling an accessory on a pallet of the conveyor system.

In some cases, the adjustment of nest offset is performed by controlling a moving element of the conveyor system.

Other aspects and features of the embodiments of the system and method will become apparent to those ordinarily skilled in the art upon review of the following description of specific embodiments in conjunction with the accompanying figures.

### BRIEF DESCRIPTION OF THE FIGURES

Embodiments of the system and method will now be described, by way of example only, with reference to the attached Figures, wherein:
Fig. 1 is a schematic diagram illustrating a conveyor system;
Fig. 2 is a schematic diagram illustrating an example of an automation system including a conveyor system and various automation stations;
Fig. 3 is a block diagram illustrating an embodiment of a system for dynamic nest and routing adjustment;
Fig. 4 is a block diagram illustrating an embodiment of a control system for a linear motor conveyor system;
Fig. 5 is a schematic diagram illustrating an example of a bottleneck in a conveyor system with automation stations;
Fig. 6 is a flow chart of an embodiment of a method for dynamic nest and routing adjustment; and
Fig. 7 is a flow chart of an embodiment of processing by a machine learning model to provide dynamic adjustment.

### DETAILED DESCRIPTION

The following description, with reference to the accompanying drawings, is provided to assist in understanding the example embodiments. The following description includes various specific details to assist in that understanding but these are to be regarded as merely examples. Accordingly, those of ordinary skill in the art will recognize that the various embodiments described herein and changes and modifications thereto, including the use of elements of one embodiment with elements of another embodiment, can be made without departing from the scope and spirit of the appended claims and their equivalents. In addition, descriptions of well-known functions and constructions may be omitted for clarity and conciseness.

The terms and words used in the following description and claims are not limited to their bibliographical meanings but are meant to be interpreted in context and used to enable a clear and consistent understanding.

Generally, the present document provides for a system and method for managing automation systems and, in particular, for dynamic nest and station adjustment. Embodiments of the system and method herein are intended to allow for a system and method that can automatically and dynamically adjust manufacturing stations and routing to allow for differences in elements of the manufacturing system and/or changes in the manufacturing system due to part/product changes, physical changes, maintenance issues, tolerance issues or changes, or the like.

While the concepts herein can be applied in various environments, the following description will focus on an automation system that uses of automation stations/equipment together with a linear motor conveyor.

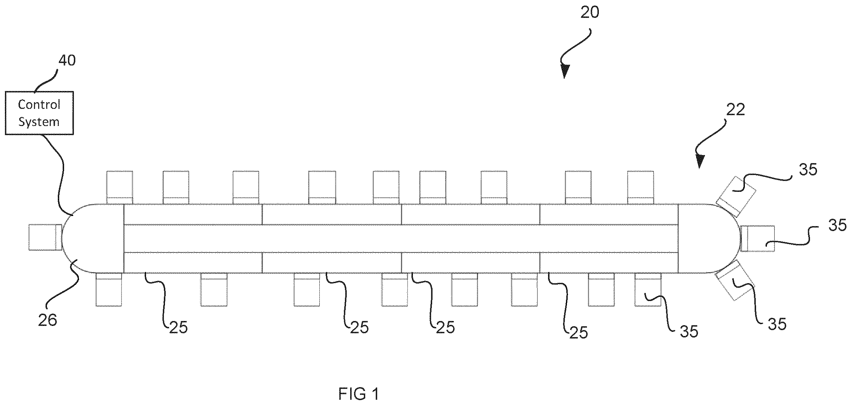

Figure 1 shows a schematic diagram of an example conveyor system 20. The conveyor system 20 includes a track 22 made up of one or more track sections 25, 26 defining a track. In Fig. 1, a plurality of straight track sections 25 are provided with two curved sections 26. A plurality of moving elements 35 are provided to the track and move around on the conveyor system 20. In a manufacturing environment, the moving elements 35 are intended to travel between workstations (not shown) and may support a pallet or product (not shown) that is to be operated on automatically by, for example, a robot, while moving or at a workstation or may travel to a workstation or other work area intended for manual operations. Through the operation of the conveyor system 20, various operations are performed to provide for the fabrication or assembly of a product. In this disclosure, the terms "moving element" and "pallet" may sometimes be used interchangeably, depending on the context.

It will be understood that the modular nature of the track sections allow for various sizes and shapes of conveyors and any appropriate number of moving elements. In Fig. 1, the corner (or curved) track sections 26 are 180 degree turns but, in some configurations, the curved track sections 26 may have different angles such as 45, 90, 135 degree angles or the like. Some of the principles of operation of a linear motor conveyor system are described in more detail in, for example, U.S. Patent No. 8,397,896 to Kleinikkink et al., which is hereby incorporated herein by reference.

As noted, the conveyor system 20 may include a plurality of track sections 25, 26, which are mechanically self-contained and separable from one another so as to be modular in nature. In order to be modular, each track section 25, 26 may house electronic circuitry and/or mechanical parts for powering and controlling the related track section 25, 26 and/or there may be a controller/control system 40 that controls the related track section or the track 22 overall (only one controller is shown but other controllers for track sections may be included as well). In some cases, a track controller may communicate or interface with track section controllers provided for each of the track sections 25, 26. The controller(s) may include a processor that executes a program stored on a machine readable medium. The machine-readable medium may be a part of the controller or at a remote location or the like.

In some types of conveyor systems, such as the linear motor conveyor system 20 shown in Fig. 1, the track 22 may produce a magnetic force for moving the moving element 35 along the track 22. The magnetic force is at least partly generated by the interaction of the magnetic flux created by magnetic elements (for example, embedded coils) of the track 22 and magnetic elements (for example, magnets) of the moving element 35. It will be understood that conveyor systems with different motor drives may be driven in other manners.

As noted above, a full automation system will also include automation stations in addition to the conveyor system, such as that shown in Fig. 1. The automation stations are typically arranged adjacent to the conveyor system and are used to handle manufacturing operations on parts moving along the conveyor system. An automation station may include a single piece of equipment/machine in a production line, such as a press, pick & place device or the like, but may also include a complex system involving robots, manipulators, and the like. Generally speaking, automation stations/equipment will have various requirements that need to be met to operate efficiently in relation to the conveyor system. For example, some requirements/parameters to be considered during automation operations together with a conveyor system include spacing, timing, trajectory, temperature, collision avoidance and the like.

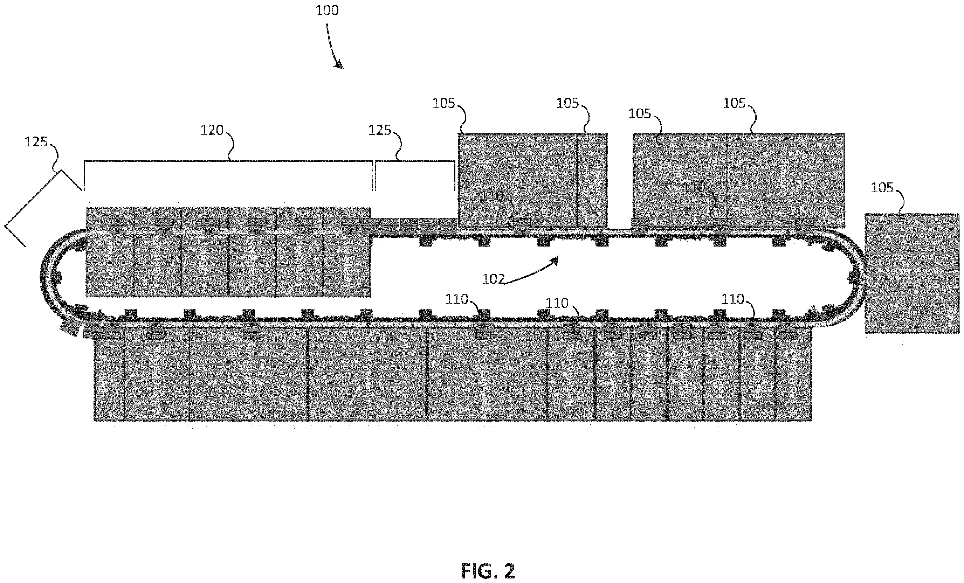

Figure 2 shows an example configuration of an automation system 100, including a conveyor system 102 and at least one automation station 105. In this case, the conveyor system 102 is a linear motor conveyor system including a track providing a linear motor that drives moving elements along the track using magnetic fields. The automation station, or automation element, 105 (which in the current example includes 23 automation stations 105) may be or include, for example, machines, sensors, servos, devices, or equipment, or a combination of machines, devices, or equipment, or the like. Each automation station 105 may require a certain amount of processing time and may further include various parameters related to their operation. As can be seen from Fig. 2, various types of automation stations may be needed and these automation stations may come from a variety of manufacturers.

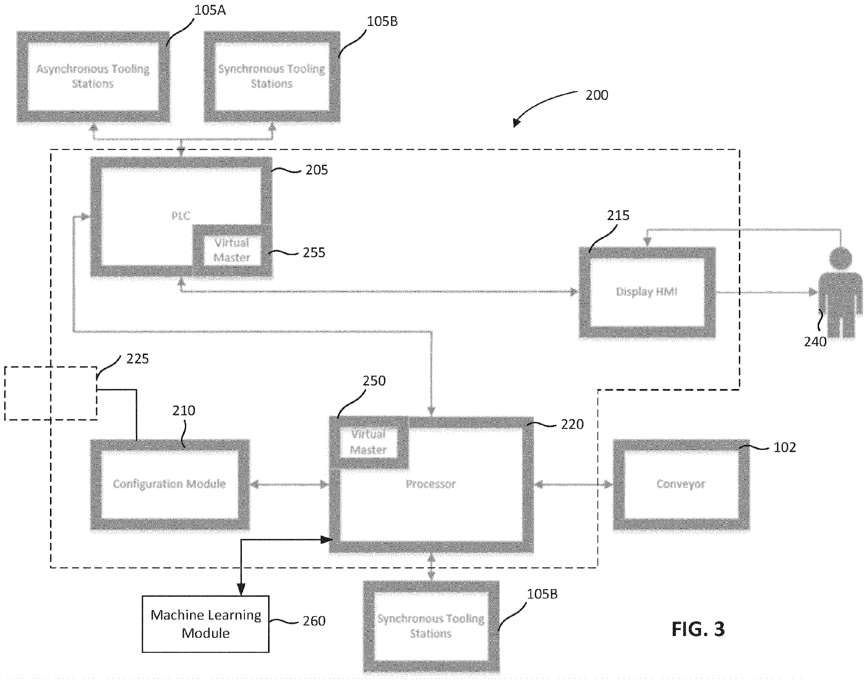

The conveyor 102 includes moving elements 110 that are configured to travel on the conveyor 102, stopping at one or more target set points ("targets") that relate to various automation stations 105 in order to have the automation station function applied to an item or object ("part or product") being carried by the moving element 110. In some cases, there may further be loading or unloading stations where the products or items are placed on or removed from the moving elements. Some of the automation stations 105 will operate in an asynchronous mode or be in an asynchronous area, in which, a moving element 110 will stop at an automation station 105 and the station will operate on a part on the moving element or the like. Generally, in an asynchronous mode, the conveyor system and automation stations 105 can accommodate variable cycle times and loading. However, in some areas, the conveyor system 102 and automation stations 105 may operate in a synchronization mode or synchronization area (indicated as synchronization area 120), in order to achieve higher speed throughput for automation stations that may be controlled by software or mechanical methods to work synchronously. For example, the automation station may be cammed either mechanically or via software - to repeat an action in a predefined manner continuously. These synchronous automation stations would generally have fixed cycle times, which allows for synchronization, for example, by following a master signal (which may be a software signal or the like as described in further detail in the description of Fig. 3). Similarly, moving elements 110 can be configured to follow a predefined motion profile within the synchronous area 120, based on the master signal. In automation systems 100 where not all automation stations 105 are synchronized in some way, transitioning between an asynchronous area and a synchronous area 120 can sometimes require a merging zone 125. The merging zone 125 can be used to adjust/align/synchronize a moving element 110 to the master signal so that the moving element can begin a motion profile sequence at the appropriate timing for entering the synchronous area 120. In order for the conveyor system 100 to work well with the various automation stations, various configuration parameters need to be managed so that the moving elements will work in synchronization with the operations of the one or more automation stations. This synchronization must generally be accomplished at high speed and over a large number of cycles in order to provide a high throughput while reducing any bottlenecks. Further, the moving elements 110 are intended to move from position to position without colliding and ensuring proper orientation for processing at each automation station.

Figure 3 illustrates a system 200 for managing automation systems according to an embodiment. As noted above, the automation system 100 that is managed by the system 200 may include a conveyor 102 and a plurality of automation stations 105 and, further, the automation stations 105 may be in asynchronous areas/zones (automation stations 105A) or synchronous areas/zones (automation stations 105B). The system 200 includes one or more programmable logic controllers (PLC) 205 (which are typically associated with an automation station and control the elements of the automation station), a configuration module 210, a display/interface 215, and at least one processor 220. The configuration module 210 may include a connection to an internal or external data source, such as a database 225 or the like.

The PLC 210 and the processor 220 can be configured to allow input of and/or receive data related to various parameters related to the automation system. For example, there may be a display/interface (human machine interface (HMI)) 215 for a user 240 to input data related to the automation system, including the conveyor system and the automation stations. In some cases, there may be access to one or more outside data sources 225, via, for example, the configuration module 210, for data from third party data sources, for automation station/equipment parameters and the like. The configuration module 210 may obtain various parameters from the database 225 such as, for example, previously saved data relating to known or previously input automation system elements or the like. The input or received data may be stored in the database 225 or the like. As will be understood, the database 225 may be distributed across one or several memories and may be accessed via a network or the like.

The configuration module 210 is configured to review the input data to determine the parameters related to configuration of the automation system. The configuration module 210 takes input data, for example, relating to manufacturer, product name/number, functionality, or the like and prepares a configuration of the automation system that takes account of various parameters involved in having the conveyor system and automation stations work together, including parameters such as communication protocol conversion, latency times, and the like. The configuration module 210 may also allow for further input and adjustments to be made by, for example, a user or users 240. Generally, the configuration module 210 is configured to review the input data and configuration parameters and make adjustments so that the automation stations and conveyor can be in communication and synchronously controlled (i.e. move in a synchronous manner under the control of a master signal) in synchronous zones/areas.

The display/interface 215 provides output information to the end user 240. The processor 220 processes data from the PLC 205 and provides processing power to the configuration module 210 for performing embodiments of the method of managing automation systems described herein. The processor 220 also provides output to the display.

Each of the PLC 205 and the processor 220 may include a master control to provide the master control signal used in synchronous areas. The master control may be in hardware or software (virtual). In this example, the processor 220 includes a virtual software processor master 250. The PLC 205 may also have a PLC virtual master 255, which can be used in the event of external master control (where the master control will 'propagate' a master control signal/information to the processor, including the state machine/elements involved). In some cases, the PLC will set and control the virtual master in the processor. The PLC will also generally control asynchronous areas and the asynchronous automation stations 105A. In the event of external master control, the PLC can control synchronized areas and synchronized automation stations 105B, otherwise the processor can control the synchronized areas and synchronized automation stations 105B. In some cases, the configuration module 220 may be further enhanced via machine learning, artificial intelligence or the like based on results from previous configurations.

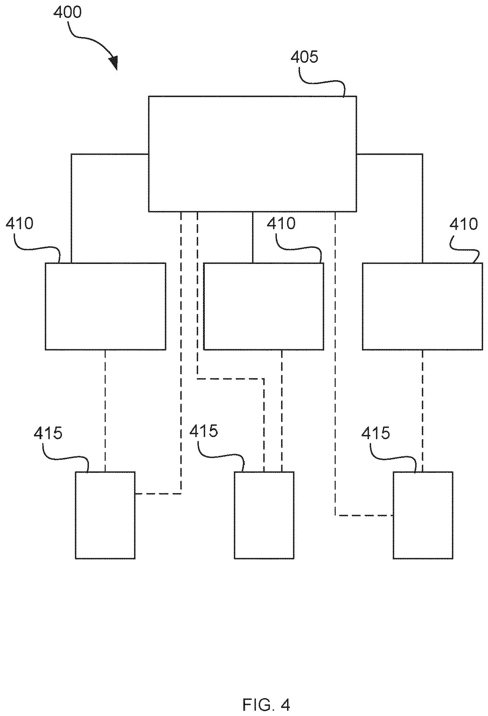

FIG. 4 is a block diagram of an example embodiment of a control system 400 for a conveyor system 20 such as that shown in Figs. 1 and 2. As shown in FIG. 4, the conveyor system 20 can include a central controller 405 that controls the overall conveyor system. This may, for example, be the controller 40 shown in Fig. 1. The conveyor system 20 may also include a plurality of track section controllers 410, for example, one for each of the track sections 25, 26. In some situations, each moving element may include some accessory on the moving element that can be operated, such as a gripper, a fixture, a motor for movement or rotation, or other device/mechanism. Either the central controller 405 or the track section controller 410 may also control an accessory on the moving element or an accessory controller 415 provided to control the operation of the accessory. There may also be control signals in both directions between the controllers. It will be understood that, in some cases, the movement of the moving element may be controlled to work in relation to or in synchronization with the control of the accessory for coordinated/synchronous operations or the like.

In some embodiments, the track section controllers 410 may be connected to one another in a peer-to-peer communications network such that, for example, each section controller 410 may be connected to preceding and following section controllers 410 through a communications link or the like, rather than each section controller being connected to the central controller 405. Some alternative embodiments may include use of the central controller 405 to convey information/data between/among section controllers 410 and/or accessory controllers 415 or the like. In some cases, the controllers of Fig. 4 may be a part of the controller of Fig. 3 or controlled by the controller of Fig. 3. Further, in some cases, the PLC(s) noted in Fig. 3 may be provided to control an accessory or may be an accessory controller of Fig. 4. Still further, in some cases, the PLC(s) of Fig. 3 may also generally be provided to control one or more of the automation stations around the conveyor system.

The various controllers may be connected via, for example, input/output (I/O), network modules, or the like. The controllers may provide instructions to both the accessories and the track section 25/moving element 35, such as directing the next destination for a moving element 35 along the track, providing instructions to the accessories to operate in a specific way depending on the location of the moving element on the track section, or the like. For example, an accessory may be controlled to rotate a part/component as the moving element moves past a flame station adjacent to the track section such that the part/component is uniformly heated around a circumference or the like.

In some cases, the controllers can also communicate with the accessory provided on the moving element in a wireless manner. In some cases, it may also be useful to communicate with or among track section controllers in a wireless manner.

As noted above, moving elements may include accessories that allow for operations on parts, including movement of parts. One example of an accessory is a fixture (nest) configured to hold parts in place. Each fixture can be prone to tolerance issues such that each fixture can be slightly different from another fixture, either on the same moving element or on other moving elements. Further, in some cases, the parts themselves can have tolerance issues and/or can also be placed slightly askew in relation to the nests (depending on the process). Under such conditions, it can be beneficial if the fixtures can be moved or can move the parts to make sure that operations on the part can be as accurate as possible. Embodiments herein are intended to provide for dynamic position correction of a part on a moving element, particularly within a synchronous area.

In embodiments herein, each moving element, or each accessory on a moving element, can be assigned a `nest-offset', that is, an amount that the particular moving element or accessory/nest needs to be adjusted to account for differences in tolerances among parts, tooling, in the accessory/nest itself, or the like. Initially, a nest-offset can be calculated based on measurements or on a history of use of the accessory/nest itself. In operation, the nest-offset can then be paired with machine learning algorithms to monitor and dynamically adjust the nest-offsets as the automation system is operating. In embodiments herein, a machine learning (ML) module/processor can be configured to: monitor and adapt each nest offset based on input data (vision systems, bad part identification, technical requirements, tolerance measurements, wear, and the like) and reinforce and adjust prior ML decisions based on subsequent performance.

Dynamic nest offsets can be particularly useful for sensitive assembly processes. An example would be cannulation, in which a thin needle is deposited into a barrel. This type of assembly operation would generally be very sensitive to barrel tolerance and position during the cannulation process. In some cases, it may be possible to monitor the actual cannulation process, for example via a vision system, such as video or the like. Such observation may reveal if there are issues in fitting the needle to the barrel. In other cases, due to spatial or system constraints it may be infeasible to monitor the actual cannulation process. In this case, there will generally be inspection stations or the like to isolate bad parts and determine the issue. By applying machine learning algorithms to either the actual or inspection-based data, pallet positional nest offsets can be determined for the cannulation point. For example, variance and frequency of scrapped parts can be analyzed to determine whether a nest offset is needed. For example, data used may include: data on specific tooling nests, data on a batch of parts having different tolerances from others, data on additive errors, pallet positional errors, or data on other reasons causing bad parts. By determining the cause of incorrect cannulation and its characteristics, a nest offset adjustment may be calculated to offset a nest on a pallet so that a part in the nest can be properly positioned, offset a moving elements motion profile such that the moving element provides the adjustment to the next position, or the like to compensate for any errors that may be causing bad parts. In embodiments of the present system, the offset would be applied automatically and could also be applied for future operations when needed such that no change over, stopping of the machine, or manual diagnostics would be required. The ability to identify nest offsets can also allow for a lower tolerance spec for parts, depending on the bad part tolerance of the machine, since variations in the parts or batches can be compensated for dynamically and automatically.

In modern automation systems, the automation system is also often intended to make two or more parts or be otherwise adaptable to manufacturing needs. This is particularly true when the two different parts have overlapping processes, for example, each part relies on a sub-set of the processes needed for both parts (i.e. part1's process is stations A-B-C and part2's process is A-B-D) or the like. In conventional automation systems, part changeovers or some form of adjustments are typically required before changing between part1 and part2 assembly. As such, the automation system must normally be shut down before changing from production of part1 to part2.

Embodiments herein are intended to dynamically switch from production of part1 to production of part2 if, for example, there is an issue making it difficult to produce part1. As particular examples, station C may become unavailable, an input for part1 is unavailable, or the like. This kind of dynamic switching can reduce part-change over time, scrap waste and downtime for systems that make two or more similar parts.

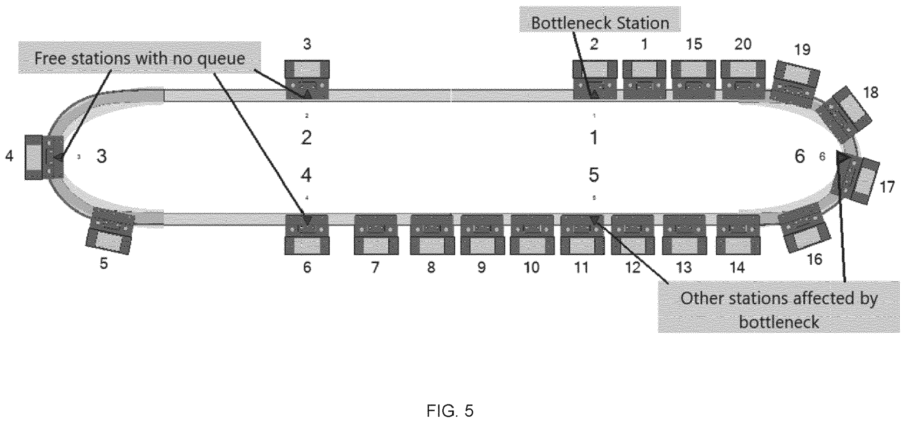

As an example, automation systems, especially asynchronous ones, may bottleneck due to an automation station being unavailable, taking an excessive time, or the like. If this type of bottleneck happens, there is a chance for a cascading effect that may result in other automation stations being backed-up/bottlenecked, while there may be a large part of the conveyor and automation stations being empty of pallets. Figure 5 illustrates a bottleneck on a conveyor system having 6 automation stations. In particular, pallets queued upstream of the problem automation station end up back propagating a delay to upstream pallets waiting to have sufficient space to enter their station, effectively slowing down the system even more. In an asynchronous system, this may be added to by an asynchronous collision avoidance accordion effect, somewhat similar to a traffic jam on a highway. Generally, a situation like this would either resolve itself over time or require manual intervention of sending pallets past the problem automation station without having been worked on to 'rebalance' the system and alleviate accordion effects. Identifying this type of bottleneck manually generally only happens well after a system's balance loading is disrupted. Embodiments herein use machine learning algorithms to analyze various data such as, for example, loading across the track, station process time, or the like to determine routing changes that can allow production of other parts to continue even if the target part cannot be completed. As a very simple example, it may be possible to let one or more pallets through a potential problem station, never allowing an automation system to get into a large bottleneck. While immediate cycle time might be worsened by `letting a pallet through', long-term performance could be improved by not allowing the system to get into the bottleneck state. In this scenario of `letting a pallet through', the situation could be like that described above in which an originally intended part1 could bypass station C, proceed to station D and become a part2 instead. Alternatively, the originally intended part1 could bypass station C for now and then be redirected back to station C once any developing backlog had been cleared.

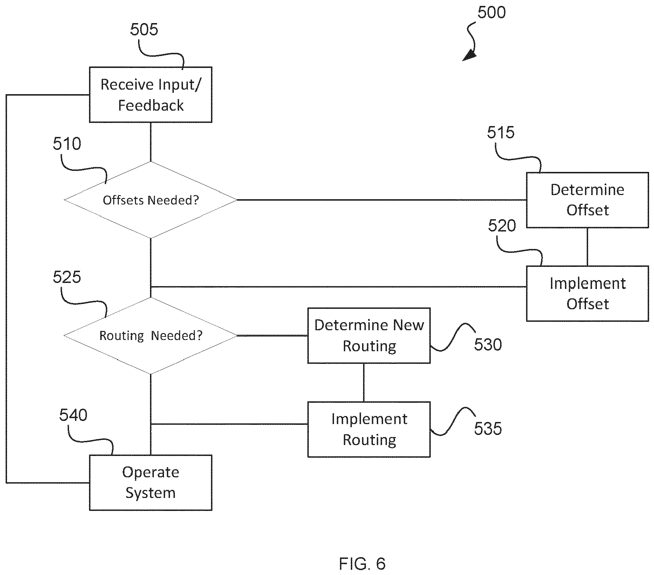

Figure 6 illustrates a method 500 for managing automation systems according to an embodiment. In particular, the method 500 manages dynamic offsets and routing within an automation system. As an automation system is operating, the method 500 monitors the process and receives inputs/feedback from the automation system and process at 505, sometimes called operational data. There are a wide variety of operational data (inputs/feedback) that can be received, including, for example, data on production requirements for different parts, data on automation stations needing maintenance, that are stopped, backed up or the like, data related to product quality (for example, sensor, such as vision, feedback or the like), data on automation station tolerances (for example, including manufacturer information), and any of the variety of other information that is available in a manufacturing environment.

The data received is analyzed by the ML module and the ML module determines if any changes to the nest offsets are needed at 510 based on the analysis. For example, if an automated visual inspection result indicates that a part is misplaced by a predetermined amount, a nest offset can be set for the automation station that places that part. If yes, the ML module determines an offset at 515, based on the predetermined amount, and the processor implements the offset at 520.

Either simultaneously or serially, the ML module determines if a new routing is needed at 525 based on the analysis. For example, the new routing may be needed because a particular automation station is out of service (for example, maintenance, either routine or to fix an error, or the like), because it is backed-up with too many parts, or the like or because manufacturing requirements have changed, or the like. In the case of a blockage due to a slow automation station, the ML module may determine that a part should be routed to a different automation station to allow the slow automation station to catch up. If a new routing is needed at 525, the ML module determines a new routing at 530 and the processor implements the new routing at 535.

The automation system then continues to operate at 540 while continuously or periodically monitoring for new input/feedback at 505 and repeating the analysis.

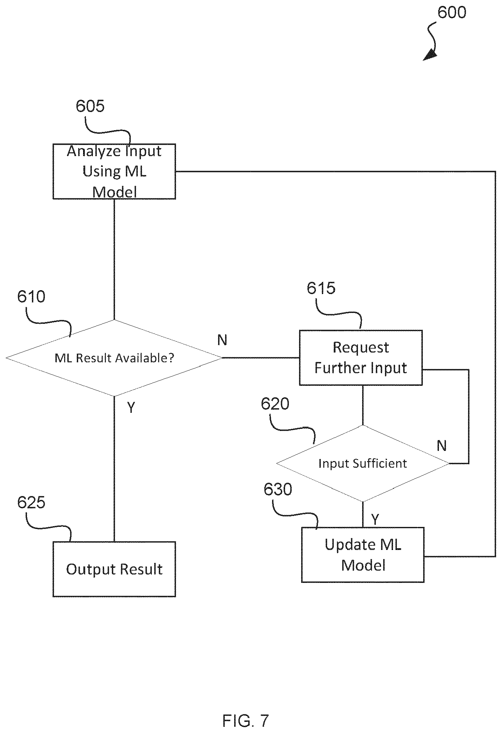

Fig. 7 is an embodiment of a method 600 for the ML module to conduct the analysis of the input/feedback. The method begins with the ML module analyzing the input using an ML model at 605. The ML module determines if an ML result can be obtained based on the input at 610. If yes, the method, at 625, outputs the result of the analysis, for example, a new nest offset or a new routing. If no, the ML module will request further input at 615. At this point, the automation system may be operated for a further period to generate the additional input or a user may provide further input. In some cases, the ML module may indicate a type of input needed. At 620, the ML module determines if the input is sufficient. If not, the method returns to 615 to obtain further input. If yes, then the method moves to 630 to update the ML model and then return to the analysis at 605. Once an ML result is available at 610, the method, at 625, outputs the result of the analysis. The updated ML model is used for future analysis.

In preparing an ML model, it is generally helpful to first determine operational data that can be representative of the need for an adjustment. For example, in the case of a nest offset, image data may indicate that a tool is not meeting a part as required. In the case of a part routing, the operating data may show that an automation station needed to create a part is stopped or the like. It will be understood that various other operating data may also be included to further tune the model to provide more accurate results. In some cases, a factor selection algorithm can be used to determine which operating data may have the most impact on the ML modelling in order to narrow the number of operating data used by the machine learning model.

In some cases, the ML model may include a range in which the ML model will take action, for example, for an offset, an action will only be taken if the offset will be +/- 1mm, 0.5mm, 0.25mm or the like. There may also be cases where the ML model may require the manufacturing system to stop rather than make an adjustment, for example, because the difference would be too high to make an adjustment. As noted above, the ML model may also be configured to request further information if, for example, the current level of data input is insufficient to provide a result. Following further information/data input, the ML model can be updated and used in subsequent processes.

In the case of nest offsets, the output from the model will generally be an amount and direction of offset. This result can then be applied to the manufacturing system and further operating data can be collected (for example, as feedback to the ML module) to determine if the issue is corrected.

An ML model can use various machine learning or AI methods for the training and analysis. For example, random forest regression, linear regression, polynomial regression, decision tree regression, deep neural networks, and the like. In one example, an ML model may be validated with 5-fold or 10-fold cross validation having train-test split 80-20 in each fold. The average root mean squared error (rmse), mean absolute error (mae), and success rate can be used to evaluate the results of the ML model. Once the model has been trained using, for example, historical data, the model can be executed based on data generated from the operation of the manufacturing system

In modern manufacturing systems, the ML model can have access to a variety and quantity of operating data. This data can include moving element accelerations, velocities and stopping locations, as well as automation station location, type/model, tolerances, previously known offsets, operating temperatures, and the like. In some cases, the operational data received can also be used to model other operational parameters such as "noise" due to things like potential variations in power delivered resulting in different stopping positions of moving elements or the like.

As an example of nest offset configuration/adjustment, the manufacturing system may include a moving element location target in relation to an automation station. The location target may initially work without a nest offset such that the moving element will move to the location target and the automation station will perform a task on the part/product held in the nest on the moving element. Operational data is then monitored by the manufacturing system and ML model for any indications that a nest offset may be needed. Once the ML model determines that a nest offset is needed, an initial nest offset can be set such that the next moving element moving to that automation station will include the initial nest offset. The manufacturing system/ML model can then continue to monitor the operational data and determine if a further offset or a different offset is needed. In some cases, the ML model may require additional data before determining a result. Such additional data can be provided, by further operating the automation system, by user input, or the like, and depending on whether a result can be obtained, the ML model can be updated accordingly. A similar approach can be taken with regard to routing of pallets/parts to provide on-going, automatic (dynamic) offsets and routing that are updated on a continuous or regular basis as the automation system operates.

In the preceding description, for purposes of explanation, numerous details are set forth in order to provide a thorough understanding of the embodiments herein. However, it will be apparent to one skilled in the art that these specific details may not be required. In other instances, well-known structures or circuits may be shown in block diagram form in order not to obscure the overall system or method. For example, specific details are not provided as to whether the embodiments described herein are implemented as a software routine, hardware circuit, firmware, or a combination thereof.

Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described embodiments can also be stored on the machine-readable medium. Software running from the machine-readable medium can interface with circuitry to perform the described tasks.

The above-described embodiments are intended to be examples only. Elements of one embodiment may be used with other embodiments and not all elements may be required in each embodiment. Alterations, modifications and variations can be effected to the particular embodiments by those of skill in the art without departing from the scope of the invention, which is defined solely by the claims appended hereto.

## Claims

1. A method for dynamic nest and routing adjustment in an automation system, the method comprising:
operating the automation system;
receiving operational data related to the automation system from a conveyor system and at least one automation station;
analyzing the operational data to determine if adjustment of nest offsets or routing of parts is required;
determining an adjusted nest offset or part routing based on the operational data;
implementing the adjusted nest offset or part routing via a configuration module of the automation system; and
return to operating the automation system.

2. A method for dynamic nest and routing adjustment according to claim 1, wherein the analyzing and determining are performed by a machine language (ML) module.

3. A method for dynamic nest and routing adjustment according to claim 2, further comprising providing feedback to update the ML module based on operational data received after the implementing.

4. A method for dynamic nest and routing adjustment according to claim 2, wherein the analyzing by a ML module comprises:
determining if an ML result is available based on a current ML model, and,
if not, requesting further input and return to determining if an ML result is available, if so, outputting the result.

5. A method for dynamic nest and routing adjustment according to any one of claims 1 to 4,
wherein the automation system includes a plurality of automation stations and the receiving operational data comprises receiving data relating to the failure of at least one of the plurality of automation stations, indicating a need for an adjustment in routing of parts.

6. A method for dynamic nest and routing adjustment according to any one of claims 1 to 5,
wherein the receiving operational data comprises receiving vision data of the at least one automation station, indicating a need for an adjustment of nest offsets.

7. A method for dynamic nest and routing adjustment according to any one of claims 1 to 6,
wherein the adjustment of nest offset is performed by controlling an accessory on a pallet of the conveyor system.

8. A method for dynamic nest and routing adjustment according to any one of claims 1 to 6,
wherein the adjustment of nest offset is performed by controlling a moving element of the conveyor system.

9. A system for dynamic nest and routing adjustment in an automation system, the system comprising:
a controller configured to operate the automation system;
an input for receiving operational data related to the automation system from a conveyor system and at least one automation station;
a machine learning (ML) module configured to analyze the operational data to determine if adjustment of nest offsets or routing of parts is required;
a processor configured to, with the machine learning (ML) module, determine an adjusted nest offset or part routing based on the operational data; and
a configuration module configured to implement the adjusted nest offset or part routing.

10. A system for dynamic nest and routing adjustment according to claim 9, further comprising providing feedback to the ML module based on operational data received after the configuration module implements the adjusted nest offset or part routing.

11. A system for dynamic nest and routing adjustment according to any one of claims 9 and 10, wherein the ML module comprises a current ML model and the ML module is configured to request further input if the current ML model doesn't return a result and update the ML model based on the further input.

12. A system for dynamic nest and routing adjustment according to any one of claims 9 to 11, wherein the at least one automation station includes a plurality of automation stations and the input receives operational data relating to the failure of at least one of the plurality of automation stations, indicating a need for an adjustment in routing of parts.

13. A system for dynamic nest and routing adjustment according to any one of claims 9 to 12, wherein the input receives operational data comprising vision data of the at least one automation station, indicating a need for an adjustment of nest offsets.

14. A system for dynamic nest and routing adjustment according to any one of claims 9 to 13, wherein the adjustment of nest offset is performed by controlling an accessory on a pallet of the conveyor system.

15. A system for dynamic nest and routing adjustment according to any one of claims 9 to 13, wherein the adjustment of nest offset is performed by controlling a moving element of the conveyor system.
